(19) Europäisches Patentamt / European Patent Office / Office européen des brevets

(11) **EP 4 411 654 A1**

(12) **EUROPEAN PATENT APPLICATION**

(43) Date of publication:
**07.08.2024 Bulletin 2024/32**

(21) Application number: **23154410.7**

(22) Date of filing: **01.02.2023**

(51) International Patent Classification (IPC):
**G06T 15/20** (2011.01) **G06T 15/50** (2011.01)

(52) Cooperative Patent Classification (CPC):
**G06T 15/205; G06T 15/506**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **VAREKAMP, Christiaan**
**5656AG Eindhoven (NL)**

(74) Representative: **Philips Intellectual Property & Standards**
**High Tech Campus 52**
**5656 AG Eindhoven (NL)**

(54) **ESTIMATING COLOUR AND DEPTH IN IMAGE**

(57) Proposed concepts thus aim to provide schemes, solutions, concept, designs, methods and systems pertaining to obtaining a prediction of at least one of the colour and depth of a location in an image of a target view of a scene. This comprises generating a plurality of depth-values along a ray corresponding to a target location in a target view of the scene based on obtained depth maps of the scene. Inputs for a neural network can then be generated based on the plurality of depth-values and provided to a first neural network trained to predict light reflection properties for positions along the ray corresponding to the plurality of depth-values. Finally, these predicted light reflection properties can be used to predict at least one of a colour and depth of the target location.

FIG. 1

**Description**

FIELD OF THE INVENTION

This invention relates to the field of estimating at least one of the colour and depth in an image, and in particular to the field of estimating at least one of the colour and depth of a location in an image of a scene.

BACKGROUND OF THE INVENTION

Estimating the colour and/or depth of a location in an image of a scene is a computationally difficult problem. This is required when, for instance, rendering novel views of a semi-3D image taken on a smartphone. From as few as two source images of a scene, a plurality of views may be rendered, each of which requires computing the colour and/or depth of reflecting objects in the scene. Prior art methods are either far from real-time or have low quality synthesis results. One drawback of current real-time methods in the art when compared to the slower but higher quality methods, is that the 'damage' caused by depth map errors occur before any warping from neighbouring source views and so cannot be easily fixed by alignment operations. For example, correlated depth errors between source view depth maps will cause synthesis errors even after alignment of multiple predictions.

For example, some current real-time capable methods try to align multiple predicted textures after they have been warped from neighbouring source views via depth image-based rendering. Other slower but higher quality methods, however, sample many 3D points along each ray in a target view, retrieving features from corresponding image positions in neighbouring source views. These features are then used to predict colours and densities for 3D point scene positions. Volume rendering may then be used to calculate the final colour and/or depth for a pixel in a target view. Other, slow but high quality, methods fit coefficients of a neural network to predict density and colour along camera rays in a depth map. After volume rendering, which comprises integration along each ray, the output colour may then be compared with ground truth pixels. In this method, however, the coefficients of the neural network are trained for a given dataset and hence do not extrapolate to new data.

What makes the current slower methods more accurate and reliable is that depth estimation is pulled as a separate (but implicit) task into the neural rendering network. The neural networks also combine many high-level features across source views such that view synthesis can use these to predict at least one of a colour and depth of a location. These steps, however, are computationally strenuous and so make the whole process slower than real-time.

There is therefore a need for a method of estimating at least one of a colour and depth of a location in an image of a scene that is relatively computationally fast yet does not include the drawbacks of current fast prior art methods.

SUMMARY OF THE INVENTION

The invention is defined by the claims.

According to examples in accordance with an aspect of the invention, there is provided a method for estimating at least one of the colour and depth of a location in an image of a scene.

The method comprises: obtaining first and second depth maps of a scene, the first and second depth maps corresponding to first and second different views of the scene, respectively; generating, based on the first and second depth maps, a plurality of depth-values along a ray corresponding to a target location in a target view of the scene, the target view being different from the first and second views of the scene; generating inputs for a first neural network based on the generated plurality of depth-values; providing the generated inputs as inputs to the first neural network, the first neural network being trained to predict, for the generated inputs, light reflection properties for positions along the ray corresponding to the plurality of depth-values; and predicting at least one of a colour and depth of the target location in an image of the target view of the scene based on the predicted light reflection properties.

Proposed concepts thus aim to provide schemes, solutions, concept, designs, methods and systems pertaining to estimating at least one of the colour and depth of a location in an image of a scene. In particular, embodiments aim to provide a method to derive a prediction or estimation of at least one of the colour and depth of a target location in an image of a target view of a scene based on a first and second depth map of the scene.

In other words, it is proposed that from only two depth maps of a scene, corresponding to first and second different views of the scene, the depth of a target location in a target view of the scene can be predicted, wherein the target view is different to both the first and second views. Alternatively, or as well as, the colour of the target location can also be predicted. This method may be utilised to render novel views of semi-3D scenes (also known as depth images or 2.5D images or range images), and due to the method's simplicity may render these novel views quickly and with efficient computation. For these views, both colour and depth are useful for rendering.

By generating inputs for a first neural network trained to predict light reflection properties for positions along a ray based on a generated plurality of depth-values, a computationally-simpler method for estimating the depth and/or colour of a location in an image of a scene is provided. This in contrast to the alternative of inputting every single possible depth-value into the first neural network. The depth and/or colour of the target location can be predicted from the predicted light reflection properties. Traditional methods perform a search to analyse all possible depth-values for a target location, not using prior estimated depth maps from source views. This method instead leverages the idea that some depth-values in a measured (sensed) or computed depth map are more likely than others to correspond to the target location's true depth. These depth-values are based on prior depth maps, and therefore the method only analyses these likely depth-values, resulting in a fast yet highly accurate method. An improved method for estimating at least one of the colour and depth of a location in an image of a scene may therefore be provided by proposed concepts.

For instance, by only inputting inputs based on the generated plurality of likely depth-values to the first neural network, rather than all possible depth-values, the neural network may be smaller and thus faster. Predictions of at least one of a colour and depth of a target location in an image of a target view of the scene may thus be provided quickly and with relatively light computational effort. In many cases, a prediction of the colour or depth of a target location may inform a prediction of the other. For instance, in situations where the local background is one colour and the local foreground is another colour, a prediction of colour may be leveraged to predict depth or vice versa.

This invention may be of particular use in the case of rendering novel views for depth images in real-time, for instance when a user is orientating the view of a depth image on their smartphone, tablet, virtual reality device, or computer. When rendering novel views, colour information is necessary to correctly render the colour of the new pixels, and depth information may be used, for example, to correctly render overlayed 3D graphics.

Ultimately, an improved method for estimating at least one of the colour and the depth of a location in an image of a scene may be supported by the proposed concept(s).

In some embodiments, the generated plurality of depth-values may comprise a local foreground depth-value and a local background depth-value. At target locations of uncertain depth, it has been realized that the local foreground depth and local background depth around the target location can often be used to accurately predict the target location's depth. This feature then allows the computationally complex problem of depth estimation to be essentially transformed into a much simpler foreground/background classification problem, thereby speeding up the estimation of the depth and/or colour of a target location.

In some embodiments, the local foreground depth-value and local background depth-value may correspond to a local minimum and a local maximum depth-value inside a spatial window centred on the target location, respectively. It has been found that that the depth map distribution around problematic object transitions, i.e. target locations of uncertain depth, is not entirely random. Instead, the depth map distribution is concentrated bimodally either falling in the classification of the local foreground or the local background. This feature thus leverages the bimodality of likely depths of a target location, thereby allowing the quicker prediction of the depth and/or colour of the target location.

In some embodiments, a size of the spatial window may be based on an expected uncertainty value of the depth of the target location in the target view of the scene. This allows for flexibility in the method. The data needed can therefore be adjusted for a more reliable local foreground or local background depth-value depending on the magnitude of the uncertainty of the depth and/or colour of the target location.

In some embodiments, the light reflection properties may comprise colour and at least one of weight and opacity. These reflection properties may then be integrated and combined along the ray in order to aid in the prediction of the colour of the target location in the target view of the scene.

In some embodiments, generating a plurality of depth-values comprises generating, based on the first and second depth maps, a third depth map corresponding to the target view of the scene; and generating, based on the third map, the plurality of depth-values for the target location in the target view of the scene. This simplifies the method, allowing processing of the first and second depth maps to be made computationally simpler.

In some embodiments, generating the third depth map may comprise forward point rendering. This allows for fast rendering, as most graphic APIs support point rendering which typically only takes 1 to 5 milliseconds.

In some embodiments, the third depth map may have a lower resolution than the first and second depth maps. This allows the computational complexity of generating the third depth map to be reduced.

In some embodiments, predicting at least one of the colour and depth of the target location in the image of the target view of the scene may comprise providing the light reflection properties as inputs to a second neural network that is trained to predict at least one of a colour and depth value based on the inputs. The use of a neural network to estimate the depth and/or colour of a target location based on the predicted light reflection properties has been found to be beneficial, resulting in fast and reliable estimations.

In some embodiments, the second neural network may comprise a multilayer perceptron. The use of a multilayer perceptron has been found to be of particular use in this context as they are relatively computationally simple and fast.

In some embodiments, generating the plurality of depth-values may be based on a local plane fit of a plurality of depth surfaces in the scene. This allows the method to account for scenes that include more complex surfaces such as slanted surfaces or points where more than two surfaces meet.

In some embodiments, the generated plurality of depth-values may comprise a local midground depth-value.

This allows the method to be more flexible and accurate in estimating the depth and/or colour of target locations.

In some embodiments, estimating at least one of the colour and depth of the target location in an image of the target view of the scene may be done in real-time.

In some embodiments, there is provided a computer program comprising code means for implementing any of the methods described above when said program is run on a processing system.

According to another aspect of the invention, there is provided a system for estimating at least one of the colour and depth of a location in an image of a scene. The system comprising: an input interface configured to obtain first and second depth maps of a scene, the first and second depth maps corresponding to first and second different views of the scene, respectively; and a depth estimating unit configured to generate, based on the first and second depth maps, a plurality of depth-values along a ray corresponding to a target location in a target view of the scene, the target view being different from the first and second views of the scene; generate inputs for a first neural network based on the generated plurality of depth-values; provide the generated inputs as inputs to the first neural network, the first neural network being trained to predict, for the generated inputs, light reflection properties for positions along the ray corresponding to the plurality of depth-values; and predict at least one of a colour and depth of the target location in an image of the target view of the scene based on the predicted light reflection properties.

Thus, there may be proposed concepts for estimating at least one of the colour and depth of a location in an image of a scene, and this may be done based on the generation and analyzing of a plurality of depth-values based on obtained first and second depth maps of the scene.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified flow diagram of a method for estimating at least one of the colour and depth of a location in an image of a scene according to a proposed embodiment;
Fig. 2 is a more in-depth flow diagram of a method for estimating at least one of the colour and depth of a location in an image of a scene according to a proposed embodiment;
Fig. 3A is a simple illustration of how the depth of a target location can be estimated according to an example method in the art;
Fig. 3B is a simple illustration of how the depth of a target location can be estimated according to a proposed embodiment;
Fig. 4 is a simplified illustration of how a local plane fit of a plurality of depth surfaces can be employed according a proposed embodiment;
Fig. 5 is a simplified block diagram of a system for estimating at least one of the colour and depth of a location in an image of a scene according to a proposed embodiment; and
Fig. 6 illustrates an example of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to estimating at least one of the colour and depth of a location in an image of a scene. According to proposed concepts, a number of possible solutions may be implemented separately or jointly. That is, although these possible solutions may be described below separately, two or more of these possible solutions may be implemented in one combination or another.

Embodiments of the invention aim to provide a method for estimating at least one of the colour and depth of a location in an image of a scene. This can be achieved by analysing first and second depth maps of the scene, and feeding generated inputs based on the depth maps into a first neural network.

Proposed concepts thus aim to obtain a prediction of at least one of the colour and depth of a location in an image of the scene. This comprises generating a plurality of depth-values along a ray corresponding to a target location in a target view of the scene based on obtained depth maps of the scene. Inputs for a neural network can then be generated based on the plurality of depth-values and provided to a first neural network trained to predict light reflection properties for positions along the ray corresponding to the plurality of depth-values. Finally, these predicted light reflection properties can be used to predict at least one of a colour and depth of the target location. In this way, a method is provided that may be computationally simple and fast yet still accurate, compared to other methods in the art. In other words, by only inputting inputs based on the generated plurality of likely depth-values to the first neural network, rather than all possible depth-values, the neural network may be smaller and thus faster than those required for current high-quality methods.

Thus, there is no need to use a trained network to directly predict a small set of ray sample locations for each view ray, but rather at least one of the colour and depth of a location in an image of the scene can be predicted based on data from depth sensors. The use of obtained depth maps of a scene is integral to the present invention, and due to this, estimating at least one of a colour and depth of a location in an image of the scene can be achieved without using a classification network around logarithmically discretized and spherically warped depth values to encode surface locations.

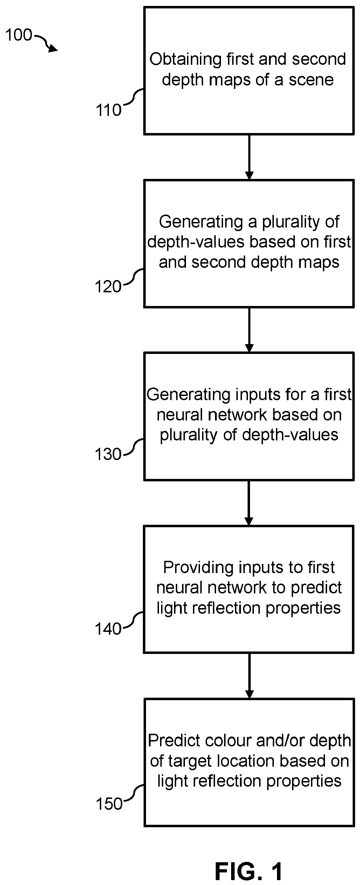

Referring now to Fig. 1, there is depicted a simplified flow diagram of a method 100 for estimating at least one of the colour and depth of a location in an image of a scene according to a proposed embodiment.

The method 100 begins with the step 110 of obtaining first and second depth maps of a scene, the first and second depth maps corresponding to first and second different views of the scene, respectively. For example, these may be provided by a camera capable of sensing depth. The first and second depth maps of a scene may comprise data from depth sensors. Alternatively, the first and second depth maps of a scene may exclusively consist of data from depth sensors.

In step 120, a plurality of depth-values along a ray corresponding to a target location in a target view of the scene are generated based on the first and second depth maps. The target view is different from the first and second views of the scene.

The generated plurality of depth-values comprise a local foreground depth-value and a local background depth-value. At target locations of uncertain depth, it has been realized that the local foreground depth and local background depth around the target location can often be used to accurately predict the target location's depth. This feature then allows the computationally complex problem of depth estimation to be essentially transformed into a much simpler foreground/background classification problem, thereby speeding up the estimation of depth of a target location, and potentially also a prediction of the colour of the target location.

The local foreground depth-value and local background depth-value correspond to a local minimum and a local maximum depth-value inside a spatial window centred on the target location, respectively. It has been found that that the depth map distribution around problematic object transitions, i.e. target locations of uncertain depth, is not entirely random. Instead, the depth map distribution is concentrated bimodally either falling in the classification of the local foreground or the local background. This feature thus leverages the bimodality of likely depths of a target location, thereby allowing the quicker prediction of the depth of the target location.

A size of the spatial window is based on an expected uncertainty value of the depth and/or colour of the target location in the target view of the scene. This allows for flexibility in the method 100. The data needed can therefore be adjusted for a more reliable local foreground or local background depth-value depending on the magnitude of the uncertainty of the depth and/or colour of the target location.

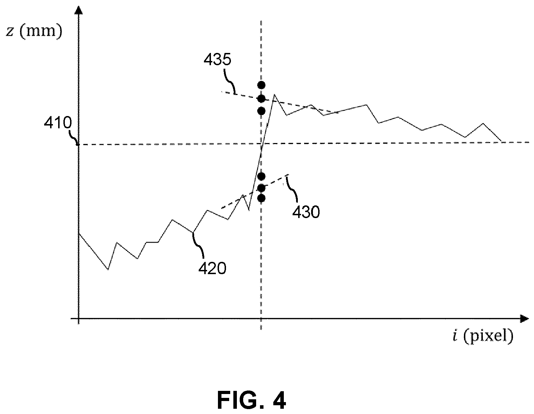

Generating the plurality of depth-values may be based on a local plane fit of a plurality of depth surfaces in the scene. This allows the method 100 to account for scenes that include more complex surfaces such as slanted surfaces or points where more than two surfaces meet. The generated plurality of depth-values may also comprise a local midground depth-value, allowing the method to be more flexible and accurate in estimating the depth of target locations. More details about this step are provided in relation to Fig. 4.

In step 130, inputs are generated for a first neural network based on the generated plurality of depth-values. For example, in one embodiment the plurality of depth-values may be used to calculate the positions of first and second reference views corresponding to the first and second depth maps of the scene respectively. Features may then be extracted from the first and second depth maps and the calculated positions of the first and second reference views. These extracted features may then be used as the generated inputs. The extracted features may not necessarily be the raw colour and depth provided in the first and second depth maps. The extracted features may be the output of several convolution steps performed on the first and second depth maps, and optionally on first and second reference view images corresponding to the first and second depth maps respectively. First and second reference view images may be first obtained. Any operations performed on reference view image data may be part of the first neural network. This is often referred to as differentiable rendering. This example may be of particular use when integrating the disclosed method 100 into existing prior art methods such as IBRNet.

In another embodiment, the inputs may be samples of the first and second depth maps, wherein the location of the samples are based on the plurality of depth-values. Alternatively, the inputs may be samples of obtained first and second reference view images corresponding to the first and second depth maps respectively.

In another embodiment, the inputs may be input vectors formed via the combination of the plurality of depth-values with image coordinates corresponding to the first and second depth maps. The input vectors may contain a 3D position and a ray-angle. Each 3D position will typically be a x,y,z position corresponding to one of the plurality of depth-values at an image pixel u,v in the target view. The ray-angle will typically be the 3D angle of the ray that corresponds with the image pixel u,v in the target view and goes through the x,y,z position. The vector may typically be represented by a 6D vector. The input vectors may then be provided as inputs to the first neural network. This example may be of particular use when integrating the disclosed method 100 into existing prior art methods such as Nerf.

In step 140, the generated inputs are provided as inputs to the first neural network. The first neural network is trained to predict, for the generated inputs, light reflection properties for positions along the ray corresponding to the plurality of depth-values. By only predicting light reflection properties for positions along the ray corresponding to the plurality of depth-values, light reflection properties likely to be of use in predicting at least one of the colour and depth of the target location may be provided quicker than if light reflection properties were predicted for all positions along the ray. In other words, light reflection properties are only predicted for positions likely to correspond to the true depth of the target location as opposed to predicted for all positions along the ray, which would take significantly longer for little benefit. In other words, light reflection properties of many positions along the ray are unnecessary for predicting the colour and/or depth of a location in an image of the target view, and so can be disregarded thereby reducing the computational cost.

The light reflection properties may comprise colour and at least one of weight and opacity. These light reflection properties may then be integrated and combined along the ray in order to aid in the prediction of the colour of the target location in the target view of the scene. In semi-volumetric representation, for a given output pixel in a target image, first an output ray in 3D space is produced. On this ray a colour and opacity or weight is predicted for a given set of points. Near depth transitions, there may be at least two points on the ray that have high opacity. Light reflection properties may further comprise more complex volume properties such as smoke, fire, water, haze, snow, glass windows, etc. These light reflection properties may then be used to predict at least one of the colour and depth of a target location in a target view.

There are several types of neural network, such as, for example, convolutional neural networks (CNNs) and recurrent neural networks (RNNs). In embodiments of the present invention, the first neural network may comprise CNN-based learning algorithms.

CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. $\pm 1\%$) to the training output data entries. This is commonly known as a supervised learning technique.

For example, weightings of the mathematical operation of each neuron may be modified until the error converges. Known methods of modifying a neural network include gradient descent, backpropagation algorithms and so on.

In step 150, at least one of a colour and depth of the target location in an image of the target view of the scene may be predicted based on the light reflection properties. When rendering the target view, colour information may be necessary to correctly render the colour of the target location, and depth information may be used, for example, to correctly render overlayed 3D graphics. The predicted depth of the target location may also or alternatively be directly provided as an output of the method 100. The predicted light reflection properties for positions along the ray may be integrated in order to predict at least one of a colour of depth. It should be noted, this process is differentiable.

Due to all these computationally-efficient steps, the method 100 can predict at least one of a colour and depth of the target location in an image of the target view of the scene in real-time. This may be of particular use when rendering novel view images for viewing in a virtual reality headset or on a smartphone.

Some slow but high-quality methods in the art for predicting a depth of a target location essentially pull depth estimation as an implicit task entirely into a neural network. This aspect, however, though accurate and reliable is responsible in part for a high computation cost. At the other extreme, other methods in the art that are comparatively faster assume that disregarding prior depth maps cause at the most a simple miss-alignment error which is obviously not the case.

The truth lies somewhere in the middle. Estimated or measured prior depth maps are neither entirely wrong nor entirely correct. To be more precise, at many target-image positions a prior depth map can be a good predictor but maybe needs a minor adjustment. Especially at depth transitions, the exact spatial image location of the depth step is often difficult to predict but it is very likely that either the local foreground depth or the local background depth will be a good predictor. So, in other words, the depth map distribution around problematic object transitions is not uniformly random but rather concentrated bimodally and exploitable in order to speed up the predicting of a depth of a target location. The depth of a target location may also then inform the prediction of the colour of the target location.

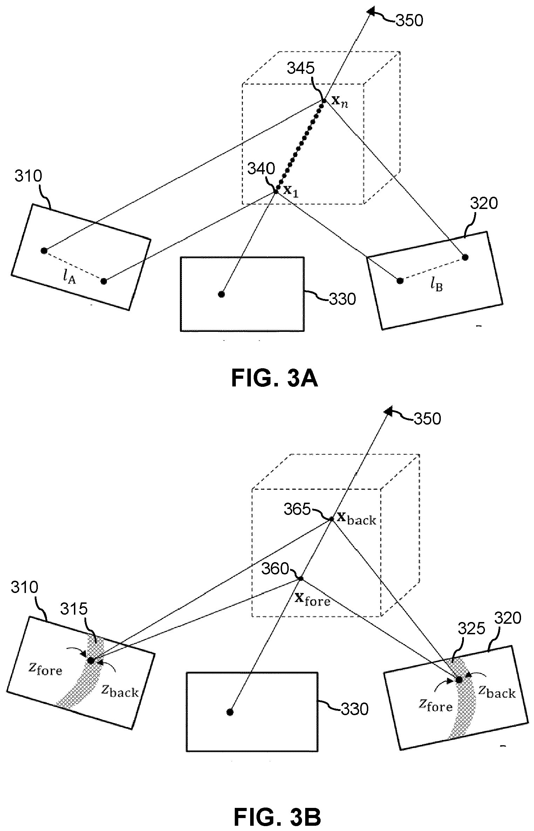

The above realizing provides a way to translate depth map uncertainty into a sampling strategy. This invention therefore proposes to generate a limited set of likely 3D candidate points, i.e. depth-values, on a target ray based on obtained depth maps. Multiple candidates are generated for which we predict with a high likelihood that at least one of them corresponds to the true depth of the target location in the target view. Essentially, proposed embodiments substantially reduce the exhaustive searches that are typically done along target rays in prior methods in the art to only a few evaluations based on a limited set of depth candidates, i.e. depth-values. Consequently, the size of the neural network may be reduced. This thinking may be more clearly illustrated later in relation to Fig. 3.

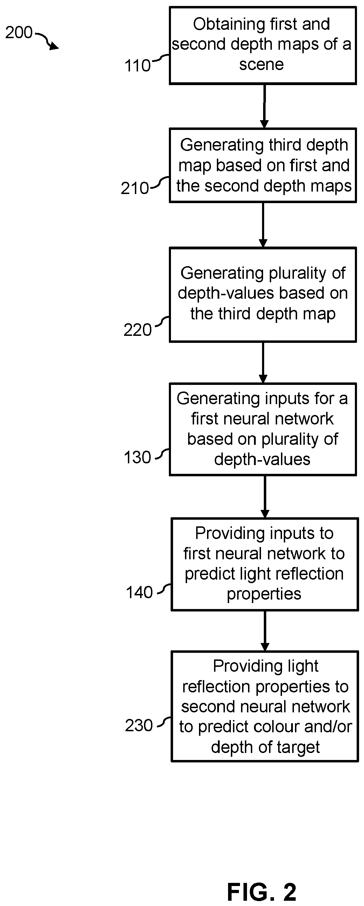

Referring now to Fig. 2, there is depicted a more in-depth flow diagram of a method 200 for estimating the depth of a location in an image of a scene.

Steps 110, 130, and 140 are substantially the same as have been described in relation to the method 100 in Fig. 1.

In step 210, a third map corresponding to the target view of the scene is generated based on the first and second depth maps. In step 220, the plurality of depth-values for the target location in the target view of the scene are generated based on the third map. This may simplify the method 200, allowing processing of the obtained depth maps to be made computationally simpler. Generating the third depth map may comprise forward point rendering. This allows for fast rendering, as most graphic APIs support point rendering which typically only takes 1 to 5 milliseconds. The third depth map may also have a lower resolution than the first and second depth maps. This allows the computational complexity of generating a third depth map to be reduced.

In other words, for a practical implementation of the method 200 fast rendering is desired. Forward point rendering may then be used to bring the first and second depth maps into the target view image coordinate, i.e. the third depth map. Most graphics APIs support point rendering and this is one of the fastest methods resulting in a typical timing of 1 to 5 milliseconds. Since multi-candidate approach will effectively deal with depth transitions, the complexity of this step may be further reduced by rendering at a lower depth map resolution. Point rendering will automatically perform depth ordering between warped source views, i.e. the first and second depth maps. So, while we can keep separate warp results from the multiple depth maps, this is not strictly needed since diss-occlusion holes will automatically be filled by the other source view.

In step 230, the light reflection properties are provided as inputs to a second neural network that is trained to predict at least one of a colour and depth value based on the inputs. The use of a neural network to estimate the colour and/or depth of a target location based on light reflection properties has been found to be beneficial, resulting in fast and reliable estimations. The second neural network may comprise a multilayer perceptron. The use of a multilayer perceptron has been found to be of particular use in this context as they are relatively computationally simple and fast. A perceptron and especially a multi-layer perceptron typically outputs non-binary variables and can also be used to directly predict real numbers such as colour values or depth levels.

Referring now to Fig. 3A, there is provided a simple illustration of how the depth of a target location can be estimated according to a method in the art. This method in the art, may for example, be a method similar to the used in IBRNet. This figure shows a method in which samples are taken along a target ray 350, originating from the target view 330, to collect features along epipolar lines $l_A$ and $l_B$ in source views 310 and 320. In other words, this method requires an exhaustive sampling along the target ray with all potential 3D points from $x_1$, 340 to $x_n$ 345 being evaluated. Prior depth information that may be available in the form of source view depth maps is not used. Consequently, many feature windows need to be extracted along epipolar lines in the source views, 310 and 320. This makes the method computationally complex and comparatively slow.

Referring now to Fig. 3B, there is provided a simple illustration of how the depth and/or colour of a target location can be estimated according to a proposed embodiment. In contrast to the method presented in Fig. 3A, this method uses source view depth maps, each corresponding to one of the source views 310 and 320, as prior info. To deal with the uncertainty in depth of the target location, especially at depth transitions, multiple candidates are generated inside a small neighbourhood, 315 and 325, of each source view pixel. Thus, a single point in each source view depth map results in two points on the target ray 350. One point corresponds to the hypothesis that the target location in the target view 330 is at a depth corresponding to the foreground 360, and one point corresponds to the hypothesis that the target location is at a depth corresponding to the background 365. In other words, this method shows that the use of estimated or measured depths from source view depth maps can be used to derive a small set of likely depth-value candidates on the target ray 350. In other words, the plurality of depth-values in this embodiment comprise only a local foreground depth-value and a local background depth-value. In the uncertain regions of the source views, i.e. the generated small neighbourhoods around each source view pixel, only two candidate depth-values are needed, one from the local foreground and one from the local background.

Once a depth map is obtained for the target view 330, such as in step 210 of method 200, likely depth candidates can be extracted along a target ray i 350 by extracting the local foreground depth and the local background depth. A simple algorithm may therefore take a local minimum and a local maximum depth value inside a spatial neighbourhood window $W_i$ cantered at ray $i$:

$$z_{\text{fore}} = \min_{j \in W_i}(z_j)$$
$$z_{\text{back}} = \max_{j \in W_i}(z_j) \tag{1}$$

Depending on the expected uncertainty of the depth transitions, the window W; around ray 350 (image point) $i$ in the target view may be selected to be smaller or larger. The candidates may be calculated in a separate GPU shader pass at a lower resolution than the target image since the neural network is assumed to take care of deciding locally between foreground and background hypotheses. Typically, a separate GPU shader pass may sample the depth map to calculate $z_{\text{fore}}$ and $z_{\text{back}}$ both still at low resolution and may use, for instance, 9 points of a 3x3 spatial kernel. Note that today's consumer electronic devices such as laptops, smartphones but also XR headsets, all contain GPU hardware. These devices typically support graphics APIs such as OpenGL ES. OpenGL ES supports running fragment shader programs that can process image pixels in parallel allowing fast filtering operations. The generation of foreground and background depth hypothesis can therefore be programmed using a fragment shader.

For a neural network to be able to predict anything, informative features are needed. If there are resources available for a relatively large neural network comprising many coefficients, all these informative features can be learned. For real-time rendering, however, a smaller network comprising fewer coefficients is needed and hence there is a need to rely more on 'hand-crafted' informative features to still ensure accurate and reliable predictions. For example, one straightforward yet informative feature is the depth step:

$$\Delta \equiv z_{\text{back}} - z_{\text{fore}} \tag{2}$$

This depth step feature per definition has a positive value. The larger its value the more likely that there is a nearby depth transition and hence the more likely that a neural network needs to make a hard choice between, for example, either the depth-value corresponding to the local foreground or the depth-value corresponding to the local background. On the other hand, if its value is small, a straightforward average of source view, 310 and 320, contributions will predict the target location's depth and/or colour. The target location may be a target pixel.

Other useful informative features for ultimately predicting the depth and/or colour of a target location may, for example, be the mean and variance of $\Delta$ over a spatial neighbourhood in the target view 330. Assuming that there are M≥1 depth features, these may be represented in a vector such as:

$$\mathbf{f}_{\text{depth}} \equiv \begin{bmatrix} f_{z,1} \\ f_{z,2} \\ \vdots \\ f_{z,M} \end{bmatrix} \tag{3}$$

Feature maps corresponding to the source views, 310 and 320, may preferably be precalculated and obtained as a video atlas. These source view features may comprise colour, texture, (coded) depth, or simply 'abstract' feature maps such as provided by the output of early or intermediate layers of an arbitrary trained neural network. For instance, a useful feature may come from an early layer of a neural network that is trained for the task of semantic object segmentation.

Pre-calculating features before encoding has the advantage that a renderer only needs to sample/interpolate the feature values from the atlas but does not need to compute them itself. Alternatively, in case feature maps would take up too much atlas space, features may partly be calculated during or after encoding.

Given source views A, 310, and B, 320, and target ray depth candidates $z_{fore}$ 360 and $z_{back}$ 365 the source view image pixel coordinates can be labelled as so:

$i_{fore}^{A}$ = source view A image pixel corresponding with foreground hypothesis

$i_{back}^{A}$ = source view A image pixel corresponding with background hypothesis

$i_{fore}^{B}$ = source view B image pixel corresponding with foreground hypothesis

$i_{back}^{B}$ = source view B pixel corresponding with background hypothesis

A source view pixel is calculated by un-projection of the target point from target view image coordinates to target view camera coordinates, rigidly transforming from target to source view camera coordinate, and calculating the source coordinate from where to retrieve the features. Expressed as linear operation in homogeneous coordinates:

$$s \begin{bmatrix} u_{source} \\ v_{source} \\ 1 \end{bmatrix} = P[R \quad \mathbf{t}]Q \begin{bmatrix} u_{target}z_{target} \\ v_{target}z_{target} \\ z_{target} \\ 1 \end{bmatrix} \tag{4}$$

In equation 4, Q is the un-projection matrix for the target view 330; R and t represent rigid rotation and translation from target to source view, 310 and 320, and P is the projection matrix for the source view camera. Note that sampling/interpolation of feature maps from the source views is typically done on the GPU using a fragment shader or compute shader. Note that feature maps can be packed as tiles in a larger atlas and that different features from the same source view image coordinate are typically sampled from different atlas positions. A single feature vector in the target view 330 may now be constructed by concatenating features from source views, 310 and 320, and foreground/background hypotheses:

$$\mathbf{f}_{source} \equiv \begin{bmatrix} g\left(i_{fore}^{A}\right) \\ g\left(i_{fore}^{B}\right) \\ g\left(i_{back}^{A}\right) \\ g\left(i_{back}^{B}\right) \end{bmatrix} \tag{5}$$

In equation 5, the function $g\left(i_{x}^{y}\right)$ denotes sampling of (multiple) features from x e {foreground, background} and source view y $\in$ {A,B}. For example, the sampled features may be the colour at the given pixel, a colour derived texture measure, or the output of intermediate layers of a convolutional network that had the source view image and or depth map as input.

Since ideally the rendering is in real-time, it is important to start with a collection of informative features for each target ray 350. The above target depth and source view features are both likely informative for the selection and render logic that the remainder of the neural network must model. Per input pixel we hence concatenate these two vectors:

$$\mathbf{f} \equiv \begin{bmatrix} \mathbf{f}_{depth} \\ \mathbf{f}_{source} \end{bmatrix} \tag{6}$$

The complexity reduction as proposed in this invention comes from the limitation of the depth candidates (i.e. depth-values) to be analysed. Essentially, embodiments involve the limiting of a full depth search along a target ray 350 to only analysing a few candidates that may beneficially correspond to local foreground and background estimates. Consequently, a multi-layer perceptron (MLP) capable of predicting at least one of a colour and depth of a target location, i.e. the second neural network, requires fewer coefficients than those typically used in the prior art since it needs to solve a much simpler task. Depth estimation is essentially transformed into a foreground/background classification problem. A low complexity network architecture can thus be used to predict the output colour of the target location. As a first optional step, a 3x3 spatial convolution may combine neighbouring feature values in the target view 330 image coordinates. This 3x3 convolution combines spatial information and could therefore improve the spatial consistency and hence the quality of the rendering result.

A small MLP (e.g., 3 layers deep with 8 nodes per layer) may then be used to predict four blend weights corresponding to a foreground or background colour/depth from source view A 310 or source view B 320. The sum of these predicted blend weights may then predict the colour/depth of the target location. In a simple case with two constant colours around a clear binary depth transition, the weights would be very close to one or zero where slight deviations from these weights could be caused by noise in the inputs.

As an alternative to this straightforward blending approach, improved synthesis results may be obtained by predicting opacities and colours at positions along the ray 350 and then using volume rendering.

Referring now to Fig. 4, there is provided a simplified illustration of how a local plane fit of a plurality of depth surfaces can be employed according to a proposed embodiment. There can be seen a class boundary 410, a noisy depth signal 420, and two local plane fits, 430 and 435. Each plane fit corresponds to the depth gradient of one of the two slanted surfaces meeting, respectively.

In some cases, the generated plurality of depth-values merely comprising a local foreground depth-value and a local background depth-value may lead to unreliable results. For instance, when the scene includes slanted surfaces, such as in Fig. 4, or points where more than two surfaces meet (known as T-junctions). This simplified binary of either foreground or background may lead to inaccurate estimations of depth. Further, depth measurement noise may have a significant effect on the minimum and maximum operations.

To avoid the above problems, surface fitting may be employed to smooth depth transitions, and further, the generated plurality of depth-values may comprise more than two values. In Fig. 4, six candidate depth-values (the solid dots) are derived based on the local plane fits, 430 and 435. Depth surface fitting acts as a filter and suppresses noise. In Fig. 4 then, instead of just one depth-value per background or foreground hypothesis, there are provided three candidate depth-values around each anticipated local foreground and local background depth-value respectively. This may increase the computational cost of the proposed method but may also increase the accuracy of the depth estimates.

In some embodiments, there is provided a computer program comprising code means for implementing any of the methods described above when said program is run on a processing system.

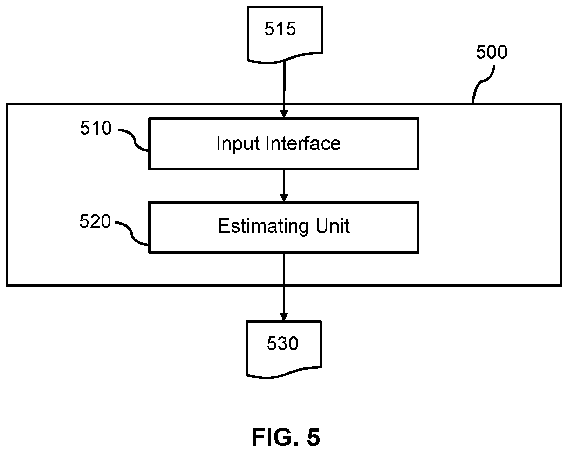

Referring now to Fig. 5, there is depicted a simplified block diagram of a system 500 for estimating at least one of the colour and depth of a location in an image of a scene according to a proposed embodiment.

The system 500 configured for estimating at least one of the colour and depth of a location in an image of a scene comprises an input interface 510, and an estimating unit 520. The estimating unit may also be referred to as a processor arrangement.

The system 500 is configured to estimate at least one of the colour and depth of a location in an image of a scene by processing input first and second depth maps 515. These depth maps correspond to first and second different views of the scene, respectively. First and second depth maps of a scene are obtained. The system outputs an output 530 comprising a prediction of a depth and/or colour of the target location in an image of the target view of the scene. The output 530 is predicted based on processing of the input first and second depth maps to ultimately generate the prediction of at least one of a colour and depth of the target location in an image of the target view.

In more detail, the input interface 510 receives input first and second depth maps 515. The input interface 510 provides the input first and second depth maps to an estimating unit 520 which is configured to process the first and second depth maps to generate a plurality of depth-values along a ray corresponding to a target location in a target view of the scene. The estimating unit 520 comprises a first neural network, for which inputs are generated based on the generated plurality of depth-values. These generated inputs may then be provided as inputs to the first neural network which is trained to predict, for the generated inputs, light reflection properties for positions along the ray corresponding to the plurality of depth-values. Based on these predicted light reflection properties, the estimating unit 520 may then provide as an output 530, a prediction of at least one of a colour and depth of the target location in an image of the target view of the scene based on the predicted light reflection properties.

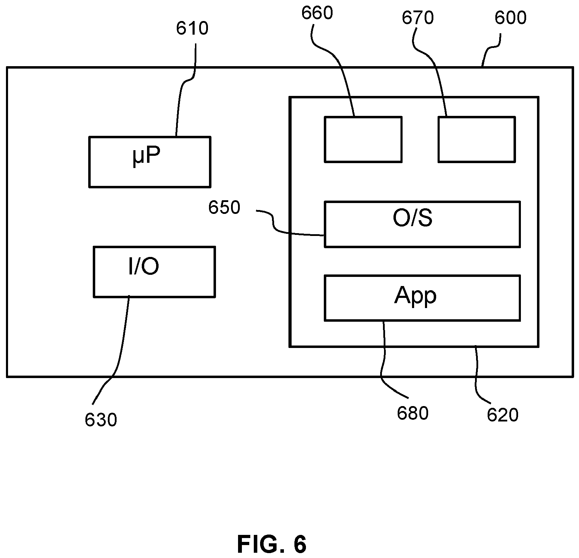

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 800 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-2, and the system of Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for estimating at least one of the colour and depth of a location in an image of a scene, the method comprising:

   obtaining first and second depth maps of a scene, the first and second depth maps corresponding to first and second different views of the scene, respectively;

generating, based on the first and second depth maps, a plurality of depth-values along a ray corresponding to a target location in a target view of the scene, the target view being different from the first and second views of the scene;

generating inputs for a first neural network based on the generated plurality of depth-values;

providing the generated inputs as inputs to the first neural network, the first neural network being trained to predict, for the generated inputs, light reflection properties for positions along the ray corresponding to the plurality of depth-values; and

predicting at least one of a colour and depth of the target location in an image of the target view of the scene based on the predicted light reflection properties.

2. The method of claim 1, wherein the generated plurality of depth-values comprise a local foreground depth-value and a local background depth-value.

3. The method of claim 2, wherein the local foreground depth-value and local background depth-value correspond to a local minimum and a local maximum depth-value inside a spatial window centered on the target location, respectively.

4. The method of claim 3, wherein a size of the spatial window is based on an expected uncertainty value of the depth of the target location in the target view of the scene.

5. The method of any prior claim, wherein the light reflection properties comprise colour and at least one of weight and opacity.

6. The method of any prior claim, wherein generating a plurality of depth-values comprises:

generating, based on the first and second depth maps, a third depth map corresponding to the target view of the scene; and

generating, based on the third depth map, the plurality of depth-values for the target location in the target view of the scene.

7. The method of claim 6, wherein generating the third depth map comprises forward point rendering.

8. The method of claim 6 or 7, wherein the third depth map has a lower resolution than the first and second depth maps.

9. The method of any prior claim, wherein predicting at least one of a colour and depth of the target location in the image of the target view of the scene comprises: providing the light reflection properties as inputs to a second neural network that is trained to predict at least one of a colour and depth value based on the inputs.

10. The method of claim 9, wherein the second neural network comprises a multilayer perceptron.

11. The method of any prior claim, wherein generating the plurality of depth-values is based on a local plane fit of a plurality of depth surfaces in the scene.

12. The method of any prior claim, wherein the generated plurality of depth-values comprise a local midground depth-value.

13. The method of any prior claim, wherein estimating the depth of the target location in an image of the target view of the scene is done in real-time.

14. A computer program comprising code means for implementing the method of any preceding claim when said program is run on a processing system.

15. A system for estimating at least one of the colour and depth of a location in an image of a scene, the method comprising:

an input interface configured to:
obtain first and second depth maps of a scene, the first and second depth maps corresponding to first and second different views of the scene, respectively; and
a depth estimating unit configured to:

generate, based on the first and second depth maps, a plurality of depth-values along a ray corresponding to a target location in a target view of the scene, the target view being different from the first and second views of the scene;

generate inputs for a first neural network based on the generated plurality of depth-values;

provide the generated inputs as inputs to the first neural network, the first neural network being trained to predict, for the generated inputs, light reflection properties for positions along the ray corresponding to the plurality of depth-values; and

predict at least one of a colour and depth of the target location in an image of the target view of the scene based on the predicted light reflection properties.

**FIG. 1**

200

Obtaining first and
second depth maps of a
scene

110

Generating third depth
map based on first and
the second depth maps

210

Generating plurality of
depth-values based on
the third depth map

220

Generating inputs for a
first neural network
based on plurality of
depth-values

130

Providing inputs to
first neural network to
predict light reflection
properties

140

Providing light
reflection properties to
second neural network
to predict colour and/or
depth of target

230

**FIG. 2**

**FIG. 3A**

**FIG. 3B**

**FIG. 4**

515

500

510 — Input Interface

520 — Estimating Unit

530

**FIG. 5**

**FIG. 6**

## EUROPEAN SEARCH REPORT

| | Application Number |
|---|---|
| | EP 23 15 4410 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG QIANQIAN ET AL: "IBRNet: Learning Multi-View Image-Based Rendering", 2021 IEEE/CVF CONFERENCE ON COMPUTER VISION AND PATTERN RECOGNITION (CVPR), IEEE, 20 June 2021 (2021-06-20), pages 4688-4697, XP034008794, DOI: 10.1109/CVPR46437.2021.00466 [retrieved on 2021-10-15] * abstract * | 1-15 | INV. G06T15/205 G06T15/506 |
| A | WO 2022/216333 A1 (GOOGLE LLC [US]) 13 October 2022 (2022-10-13) * abstract * | 1-15 | |

| TECHNICAL FIELDS SEARCHED (IPC) |
|---|
| G06T |

The present search report has been drawn up for all claims

| Place of search | Date of completion of the search | Examiner |
|---|---|---|
| Berlin | 15 June 2023 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 4410

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2023

| Patent document cited in search report | Publication date | Patent family member(s) | Publication date |
|---|---|---|---|
| WO 2022216333 A1 | 13-10-2022 | CN 115529835 A | 27-12-2022 |
| | | EP 4091141 A1 | 23-11-2022 |
| | | KR 20220140402 A | 18-10-2022 |
| | | TW 202240530 A | 16-10-2022 |
| | | US 2022398705 A1 | 15-12-2022 |
| | | WO 2022216333 A1 | 13-10-2022 |

For more details about this annex : see Official Journal of the European Patent Office, No. 12/82